# EUROPÄISCHE PATENTSCHRIFT

(11) **EP 0 490 057 B1**
(45) Veröffentlichungstag und Bekanntmachung des Hinweises auf die Patenterteilung: **09.03.1994**
(21) Anmeldenummer: 91117697.2
(22) Anmeldetag: 17.10.1991
(51) Int. Cl.: B26D 1/00, B26D 7/01, B26D 3/16, B29D 29/10

(54) **Vorrichtung zum Schneiden von dünnwandigen Riemen mit rechteckigem Querschnitt**
Apparatus for cutting of thin walled belts with rectangular cross-section
Dispositif pour découper des bandes à paroi mince de section rectangulaire

(30) Priorität: 14.12.1990 DE 4039944
(43) Veröffentlichungstag der Anmeldung: 17.06.1992
(73) Patentinhaber: HERMANN BERSTORFF Maschinenbau GmbH, D-30627 Hannover (Kleefeld) (DE)
(72) Erfinder: Borchardt, Horst, Dipl.-Ing., W-3167 Burgdorf (DE); Barkowsky, Peter, W-3167 Burgdorf (DE); Friedrich, Jörg-Richard, Dipl.-Ing., W-3204 Nordstemmen 1 (DE)

(56) Entgegenhaltungen:
- DE-A- 3 524 583
- DE-C- 3 414 674
- DE-C- 3 443 685
- FR-A- 2 099 084
- US-A- 3 107 563

## Beschreibung

Die Erfindung betrifft eine Vorrichtung zum Schneiden von dünnwandigen Riemen mit rechteckigem Querschnitt gemäß dem Oberbegriff des Anspruchs 1.

Aus der DE-PS 31 28 111 ist bekannt, daß zum Herstellen von dünnwandigen, flankenoffenen Keilriemen ein faserarmierter, hülsenförmiger Gummiwickel auf um ihre Längsachsen drehbar gelagerte und auseinanderfahrbare Walzen gestülpt wird, um ihn anschließend mit einem oder mehreren Messern in einzelne Keilriemen zu zerschneiden. Mit solchen Schneidmaschinen lassen sich aus jedem Wickel zwar dünnwandige Keilriemen mit gleichen Abmessungen schneiden, nachteilig ist aber, daß sich der Fertigungsablauf zur Herstellung solcher Riemen nur in sehr begrenztem Maß automatisieren läßt. Schließlich müssen nach dem Zertrennen eines Gummiwickels in eine Vielzahl von Einzelkeilriemen zunächst die Keilriemen auf den Walzen entspannt und nach dem Wegschwenken eines Walzenständers von den Walzen abgenommen werden. Erst danach ist die Vorrichtung erneut mit einem Wickel belegbar und die Riemen stehen für die weitere Bearbeitung als ein Haufen von in der Regel 20 bis 100 Stück zur Verfügung.

Dünnwandige Riemen mit rechtwinkligem Querschnitt lassen sich auf dieser Vorrichtung nicht herstellen, da der durch eine Klemmeinrichtung gegen einen Halteschuh gedrückte Wickel Verformungen ausgesetzt ist, die exakte Riemenabmessungen jedenfalls bei rechtwinkligem Querschnitt nicht erlauben (Spalte 4, Zeile 66 f).

Außerdem ist aus der DE-PS 34 43 685 des Anmelders eine Keilriemenschneidmaschine mit freitragender Antriebs- und Spannwalze bekannt, bei der der Wickel über beide Walzen gestülpt und gespannt wird. Durch eine Verschwenkung der Spannwalze um eine senkrecht zur Walzenachse liegenden Drehachse erfährt der Wickel eine Bewegungskomponente, die ihn während seiner Rotation um die beiden Walzen gegen einen mit einem Kraftsensor versehbaren Rollenanschlag treibt. Eine mit dem Sensor verbundene Steuereinrichtung vergleicht die Anschlagskraft des Wickels mit einer zuvor eingestellten Sollkraft. Ist diese durch die weitere Verschwenkung der Spannwalze erreicht, so schneidet ein Messer einen Riemen mit bestimmter Breite vom Wickel ab. Der abgeschnittene Riemen wird von einer Fangvorrichtung aufgenommen und zu anderen Bearbeitungsstationen weitergeleitet. Durch eine Änderung des Verschwenkungswinkels der Spannwalze und durch ein Vorschieben des sensorbestückten Anschlages, wird der Wickel in Position zum Abschneiden des nächsten Riemens gebracht.

Dem großen Vorteil der Teilautomatisierbarkeit dieses Riemenherstellungsprozesses durch das periodische Abnehmen und Abtransportieren des gerade geschnittenen Riemens steht der Nachteil gegenüber, daß mit einer solchen Anlage nur vergleichsweise dicke Gummiwickel in abmessungsgleiche Riemen auftrennbar sind. Dies hat seine Ursache darin, daß der Anschlag eine geringe Kraft auf den Wickel ausübt, die zu einer lokalen Verformung am Angriffspunkt des Anschlages an der hinteren Wickelstirnseite führt. Außerdem bewirkt diese Anschlagskraft eine Stauchung des Gesamtwickels, die um so größer ausfällt, je dünner der Gummiwickel ist.

Da der zwischen den Walzen aufgespannte Gummiwickel bei einer auf eine seiner Stirnseiten angreifenden Kraft ein federähnliches Verhalten zeigt, macht sich die Stauchung entlang des Wickels auf der Gegenseite um so stärker bemerkbar, je breiter der durch ständiges Abschneiden von Riemen verbleibende Wickelrest ist.

Dies hat zur Folge, daß auf einer solchermaßen arbeitenden Schneidvorrichtung dünne Riemen nur mit einer gewissen Breitentoleranz geschnitten werden können, die in der Regel bei Rechteckriemen nicht akzeptabel ist. Hingegen können aber Riemen, die aus einem vergleichsweise dicken und damit gegen die Anschlagsverformung weniger empfindlichen Wickel geschnitten werden, mit großem Nutzen auf dieser Anlage produziert werden. Auch bei der Herstellung von flankenoffenen Keilriemen machen sich die Nachteile der beschriebenen Anlage nicht schädlich bemerkbar, da lediglich das von den Messern abgeschnittene Abfallstück mehr oder weniger groß ausfällt.

Der Erfindung lag demnach die Aufgabe zugrunde, eine Vorrichtung zum Herstellen von Riemen gemäß dem deutschen Patent 34 43 685 derart weiterzuentwickeln, daß mit ihr auch dünne Gummiwickel in rechteckige Riemen schneidbar sind. Mit ihr sollten mit nur einem Messer ohne Anfall von Abfall aus einem Wickel abmessungsgleiche Riemen mit großer Genauigkeit schneidbar und die abgetrennten Riemen sollten nach ihrem Abtrennen leicht von den Walzen zwecks weiterer Verarbeitung entfernbar sein.

Die Lösung dieser Aufgabe ergibt sich aus den Merkmalen des Hauptanspruchs. Vorteilhafte Weiterbildungen und Ausgestaltungen können den Unteransprüchen entnommen werden.

Zur Erläuterung der Erfindung dient die Zeichnung, in der verschiedene Ausführungsbeispiele dargestellt sind.

Es zeigen:
- Fig. 1: eine schematisierte Ansicht einer Vorrichtung zum Zerschneiden eines Gummiwickels.
- Fig. 2: eine Teilansicht gemäß Fig. 1 mit einem Mehrfachrollenanschlag.
- Fig. 3: eine Ansicht wie Fig. 2, jedoch mit einem Gleitschuhanschlag.

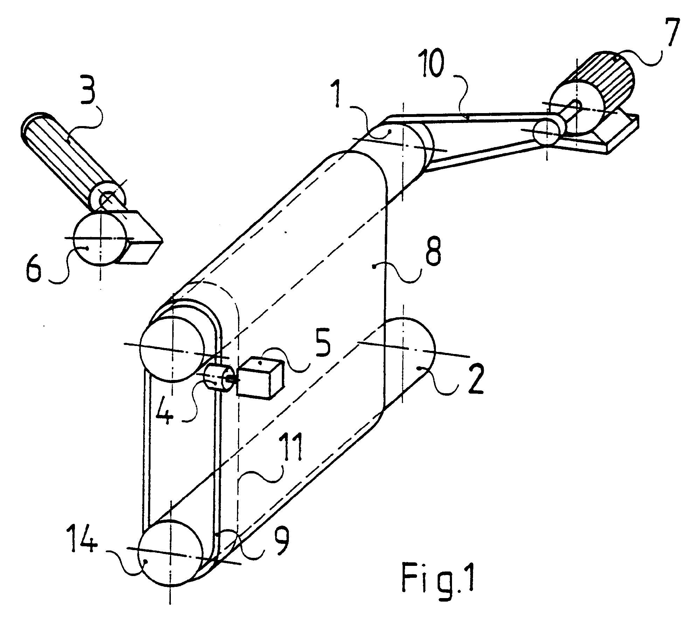

In der in Fig. 1 dargestellten Zerschneidvorrichtung für einen Gummiwickel ist der Wickel 8 in bekannter Weise zwischen einer Antriebswalze 1 und einer Spannwalze 2 aufgespannt. Die Antriebswalze 1 wird über einen Antriebsriemen 10 von einem Motor 7 angetrieben, während die Walze 2 zum Spannen des Wickels 8 dient. An der dem Walzenantrieb abgewandten Stirnseite 9 des Wickels 8 ist ein über einen Motor 3 antreibbares Trennmesser 6 angeordnet, mit dem von dem Gummiwickel 8 entlang der Trennlinie 11 Riemen rechteckigen Querschnitts mit gleicher Breite abschneidbar sind.

Durch Verschwenken der Drehachse 14 der Spannwalze 2 um der zu dieser vertikalen Achse ist erreichbar, daß der Wickel bei seinem Umlauf um die Walzen 1, 2 eine Bewegungskomponente erhält, die von der Walzenantriebsseite wegweist.

Dadurch ist es in an sich bekannter Weise möglich, den Wickel 8 nach dem Abtrennen eines Riemens unter dem Messer 6 ein Stück vorzuschieben, um das Abschneiden des nächsten Riemens zu ermöglichen.

Im Bereich der schneidseitigen Stirnseite der Walzen 1, 2 ist ein rollenförmiger Anschlag 4 angeordnet, der mit einem Kraftsensor 5 verbunden ist.

Der Sensor 5 ist seinerseits mit einer Steuerungseinheit für die Auslenkung der Spannwalze verbunden, so daß durch ein optimales Verschwenken der Spannwalze 2 der Wickel 8 lediglich eine solche Kraftkomponente in Richtung Anschlag 4 erfährt, daß gerade ein sicherer Flächenkontakt während eines ganzen Wickelumlaufs um die Walzen 1, 2 gewährleistet ist. Der an dieser Position angeordnete Anschlag 4 ermöglicht unter Aufbringung der nur geringen Anschlagkraft (z.B. 100 Newton) eine Verbesserung der Laufruhe des Wickels.

Zudem wird durch die Anordnung des Anschlages 4 an der Vorderseite des Wickels 8 die durch die Anschlagkraft verursachte Verformung des Wickels 8 zwar nicht vermieden, ihre Auswirkung auf die Genauigkeit der abzutrennenden Riemenbreite ist aber während der gesamten Trennzeit des Wickels im wesentlichen konstant. Dadurch lassen sich auch dünne Wickel mit einer Genauigkeit in Riemen gleicher Breite zerschneiden, die nur noch von der Meßtoleranz des Kraftsensors 5 an dem Anschlag 4 abhängt.

Da das Verhältnis von Wickelbreite zu Riemenbreite einen Wert von 20 zu 1 bis 100 zu 1 annehmen kann, lassen sich die Genauigkeit mit der Riemen gleicher Breite zu schneiden sind, gegenüber dem bisher bekannten automatisierbaren Anlagen etwa um diesen Faktor verbessern, bei denen der Anschlag auf der Antriebsseite der Walzen angeordnet ist.

Damit der abgetrennte Riemen von der Schneidvorrichtung abgenommen und automatisch zu weiteren Bearbeitungseinrichtungen abtransportiert werden kann, ist der Anschlag 4 so ausgebildet, daß er von der Wikkelstirnseite 9 wegschwenkbar ausgebildet.

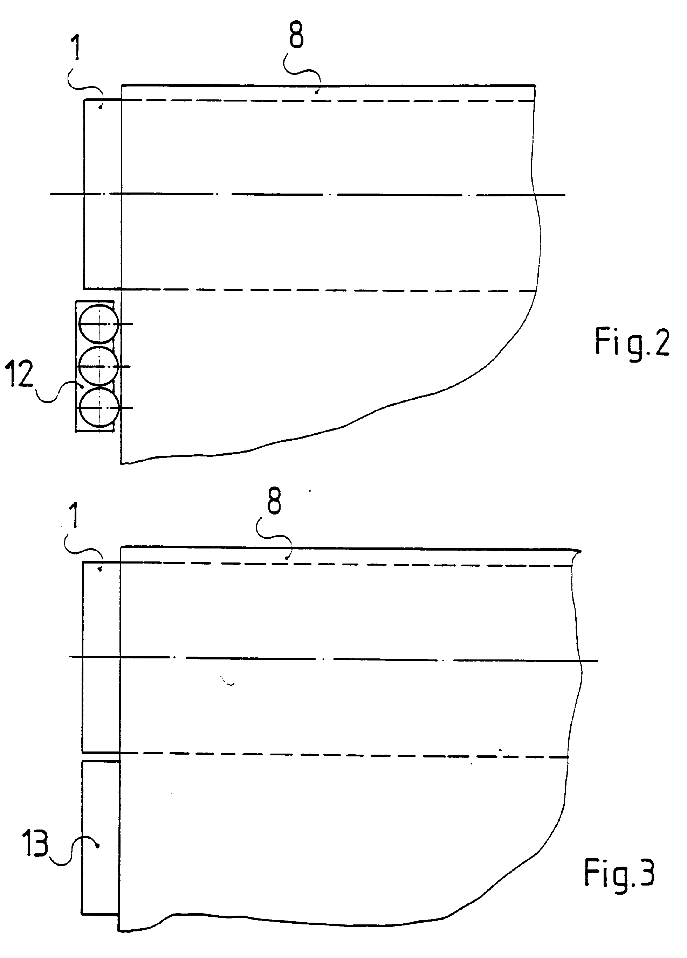

Eine weitere Verbesserung der Riemenbreitentoleranz kann dadurch erreicht werden, daß der Anschlag 4 als Mehrfachrollenanschlag gemäß Fig. 2 oder als Gleitschuh gemäß Fig. 3 ausgebildet ist. Durch diese bauliche Maßnahme wird eine Vergrößerung der Angriffsfläche an die aufzuhaltende Wickelstirnseite erreicht, was eine Verringerung der Verformung der Wickelstirnseite zur Folge hat.

### Bezugszeichenliste:

- 1: = Antriebswalze
- 2: = Spannwalze
- 3: = Motor
- 4: = Anschlagrolle
- 5: = Kraftsensor
- 6: = Trennmesser
- 7: = Motor
- 8: = Gummiwickel
- 9: = Trennseitige Wickelstirnseite
- 10: = Antriebsriemen
- 11: = Trennlinie
- 12: = Mehrfachrollenanschlag
- 13: = Gleitschuhanschlag
- 14: = Drehachse der Spannwalze

## Patentansprüche

1. Vorrichtung zum Schneiden von dünnwandigen Riemen mit rechtwinkligem Querschnitt aus einem schlauchförmigen Gummiwickel (8), der über eine Antriebswalze (1) und eine Spannwalze (2) gestülpt, unter einer Schneideinrichtung (3, 6) angeordnet ist und bei der der Wickel (8) durch Verschwenken einer der beiden Walzen (1, 2) eine im wesentlichen parallel zu der Drehachse der ortsfesten Walze wirkende Kraft erfährt und bei der der Wickel (8) durch einen mit einem Kraftsensor (5) versehenen Anschlag (4) in seiner durch die Verschwenkungen ver ursachten Bewegung aufgehalten wird,
**dadurch gekennzeichnet,**
daß der mit einem Kraftsensor (5) versehene Anschlag (4) schwenkbar und an der der Schneideinrichtung (3, 6) zugewandten Seite des Wickels (8) angeordnet ist.

2. Vorrichtung gemäß Anspruch 1,
**dadurch gekennzeichnet,**
daß der Anschlag (4) als Rollenanschlag (4), als Mehrfachrollenanschlag (12) oder als Gleitschuhanschlag (13) ausgebildet ist.

3. Vorrichtung gemäß den Ansprüchen 1 und 2,
**dadurch gekennzeichnet,**
daß die Schneideinrichtung (3, 6) über einen Antriebsmotor (3) und ein Trennmesser (6) verfügt.

## Claims

1. Apparatus for cutting thin-walled belts of rectangular cross-section from a hose-shaped rubber sleeve (8), which is put over a drive roll (1) and a tension roll (2) and arranged under a cutting device (3, 6), by swivelling one of the two rolls (1, 2) the sleeve (8) being exposed to a force that acts mainly in parallel to the axis of rotation of the stationary roll, and the sleeve (8) being stopped in its movement caused by swivelling by a stop (4) that is provided with a force sensor (5),
**characterized in that**
the stop (4) that is provided with a force sensor (5) can be swivelled and is arranged at the side of the sleeve (8) facing the cutting device.

2. Apparatus as per claim 1,
**characterized in that**
the stop (4) can be designed as a roller stop (4), as a multiple roller stop (12), or as a sliding shoe stop (13).

3. Apparatus as per claims 1 and 2,
**characterized in that**
the cutting device (3, 6) is provided with a drive motor (3) and a separating knife (6).

## Revendications

1. Appareil pour couper des courroies à paroi mince et à section rectangulaire d'un enroulement en caoutchouc tubulaire (8) qui est poussé sur un cylindre d'entraînement (1) et sur un cylindre tendeur (2), arrangé au-dessous d'un dispositif de coupe (3, 6), l'enroulement (8) subissant une force causée par le pivotement d'un des deux cylindre (1, 2) qui est essentiellement en parallèle avec l'axe de rotation du cylindre stationnaire et le mouvement de l'enroulement (8) causé le pivotement étant arrêté par une butée (4) munie d'un capteur de force (5),
**caractérisé en ce que**
la butée (4) munie d'un capteur de force (5) est montée de façon pivotable et sur le côté de l'enroulement (8) donnant en direction du dispositif de coupe (3, 6).

2. Appareil selon revendication 1,
**caractérisé en ce que**
la butée (4) est conçue comme butée à rouleau (4), butée à plusieurs rouleaux (12) ou comme butée à patin (13).

3. Appareil selon les revendications 1 et 2,
**caractérisé en ce que**
le dispositif de coupe (3, 6) est pourvu d'un moteur d'entraînement (3) et d'un couteau (6).
